# FASCICULE DE BREVET EUROPEEN

(11) **EP 0 504 125 B1**
(45) Date de publication et mention de la délivrance du brevet: **02.01.1997**
(21) Numéro de dépôt: 92870030.1
(22) Date de dépôt: 24.02.1992
(51) Int. Cl.: H02H 1/00

(54) **Disjoncteur anti-incendie pour courants alternatifs et continus par detéction de courants de contact ponctuels**
Feuerschutzschalter für Wechsel- und Gleichstrom durch Detektion der Punktkontaktströme
Fire protection circuit breaker for AC and DC current by detecting point contact currents

(30) Priorité: 22.02.1991 BE 9100172
(43) Date de publication de la demande: 16.09.1992
(73) Titulaire: Nicolai de Gorhez, Maximilien, B-1180 Bruxelles (BE)
(72) Inventeur: Nicolai de Gorhez, Maximilien, B-1180 Bruxelles (BE)

(56) Documents cités:
- EP-A- 0 135 795
- WO-A-90/04278
- GB-A- 2 229 053
- US-A- 4 466 071
- IEEE TRANSACTIONS ON POWER APPARATUS AND SYSTEMS, vol. 101, no. 6, 6 juin 1982, New York US, pp. 1596-1606; B.M. AUCOIN : 'Distribution high impedance fault detection utilizing high frequency current components'

## Description

Le présent brevet d'invention a pour but la réalisation d'un disjoncteur réagissant aux court-circuits ou aux faux contacts d'un circuit connecté à une charge importante, ce faux contact donnant lieu à un échauffement également susceptible d'initier un incendie.
Le présent brevet concerne donc tout spécialement tous les moyens de transports, voitures automobiles, autocars, avions, bateaux ou même trains, et tous les lieux où un réseau électrique de courant continu ou alternatif est susceptible d'être à l'origine d'un incendie par le fait d'un court-circuit ou d'un faux contact qui se déclarerait à un endroit quelquonque du réseau électrique sus-mentionné.
De plus, du fait de la conception purement inductive de la détection, il est possible, pour les structures telles que dépôts ou usines, dont les dimensions impliquent des longueurs de circuits électriques trop importantes que pour pouvoir rencontrer les exigences de sensibilité souhaitées, de disposer des éléments en série dans les circuits électriques de manière à avoir chaque fois une protection en aval du disjoncteur.

Le présent brevet d'invention est basé sur la constatation du fait que lors d'un incendie ayant une origine électrique, il ne peut y avoir dégagement de chaleur à l'endroit du court-circuit ou du faux contact, sans que ce phénomène thermique ne soit immanquablement le siège d'une importante production d'étincelles.
Or, c'est justement cette présence d'étincelles qui trahit l'établissement d'un contact ponctuel engendrant les courants haute fréquence caractéristiques qui ont été mis en évidence et dont il sera question plus loin, et qui permettront une détection par induction, pour ensuite actionner le disjoncteur situé en amont.

Il y a peut-être lieu ici de préciser davantage cette notion de contact ponctuel, que l'on pourrait définir dans un premier temps comme étant "tout contact entre deux corps conducteurs pouvant donner lieu à un courant électrique, et dont les conditions électriques et les contraintes mécaniques ne donnent pas lieu à un courant électrique parfaitement stable, soit dans le temps et/ou en intensité, en d'autres termes à un contact franc d'une part, et d'autre part, dont ces mêmes conditions et contraintes électriques et mécaniques ne résultent pas en une isolation totale qui ne permettrait le passage d'aucun courant. Le contact ponctuel est donc situé entre deux limites et présente la caractéristique de n'être à la fois et en même temps, ni un contact franc ni une isolation parfaite.
Il est a noter que le contact ponctuel n'est pas à considérer du point de vue physique du contact entre deux corps qui se touchent, mais bien du point de vue électrique du courant qui passe d'un corps conducteur à l'autre, même si les deux phénomènes sont le plus souvent concommitants; néanmoins, un arc élecrique entre deux conducteurs soumis à des potentiels fortement différents et qui ne se touchent nullement d'un point de vue strictement physique est à considérer comme faisant également partie du concept de contact ponctuel.

Actuellement, la seule protection contre l'incendie est l'utilisation de fusibles; cependant, comme bien souvent, le courant moyen de court-circuit est inférieur à la valeur nominale du fusible, celui-çi ne déclenche pas, et ceçi est à l'origine des si nombreux incendies ayant une origine électrique que l'on peut voir, tant en ce qui concerne les batiments que les véhicules; d'autant plus que pour ces derniers, il est absolument impératif, lorsque du carburant s'échappe du réservoir après un impact, de pouvoir couper court à toute présence d'étincelles avant que ne fût ce que des vapeurs de ce carburant n'aient eu le temps de se répandre.

Bien sûr, si le court-circuit est franc, le fusible de l'installation saute; le présent dispositif est d'ailleurs inopérant dans ces conditions.
Le système proposé ne remplace donc pas les fusibles, toujours nécéssaires pour protéger les circuits contre les court-circuits francs; en fait, les deux systèmes sont complémentaires, et devraient coexister pour une protection efficace contre l'incendie.
Le point essentiel du présent brevet est donc basé sur le fait suivant: il a été supposé, et ceçi a été confirmé par l'expérimentation, qu'il existe à la jonction conducteur/conducteur ou conducteur/air/conducteur, lors d'un contact non franc, une conductivité variable de rythme élevé accompagnée ou non d'une production d'étincelles visibles. En effet, presque toujours un contact de court-circuit met en jeu des surfaces extrêmement ténues par rapport à l'importance du courant, et ce contact très ponctuel allant de pair avec une pression de contact généralement faible ne permet qu'à une partie très restreinte de matière conductrice d'être le passage obligé de tout le courant électrique qui y passe du fait de l'établissement du courant de court-circuit ou du courant alimentant une charge importante.
C'est probablement cette situation qui engendre ce phénomène de conductivité variable à un rythme élevé.

Ces constatations amènent aux conclusions suivantes:

Comme la présence d'étincelles est toujours accompagnée de ce phénomène de conductivité variant à un rythme élevé, (l'inverse n'étant pas toujours le cas), il suffit d'insérer un système de détection par induction en série dans le circuit électrique considéré pour pouvoir commander la mise hors circuit immédiate de ce dernier par l'action d'un disjoncteur, sitôt la présence de fréquences suspectes détectées en aval de la ligne, fréquences suspectes qui seront déterminées telles au travers de techniques digitales associées à des bases de temps précises pilotées par quartz.

Le signal de commande à la bobine du disjoncteur pouvant résulter d'une méthode de détection ou d'une autre, car on peut également procéder par un shunt sur le circuit de charge pour détecter ces impulsions ou trains d'impulsions.

De toute manière, quel que soit le phénomène physique qui est à l'origine de ces courants très haute fréquence (aussi appelés courants de contacts ponctuels dans cet exposé), que l'on peut mettre en évidence par simple détection inductive lors d'un contact non franc ou un court-circuit, qu'ils soient dûs à un phénomène de résonnance électronique ou associés au spin ou à tout autre phénomène, leur spécificité est telle qu'elle permet d'envisager, par un traitement adéquat de ces impulsions au travers de techniques digitales associées à des bases de temps, un dispositif assurant une protection efficace contre l'incendie.

Le document GB-A-2 229 053 divulgue un disjoncteur anti-incendie pour faire face au problème des incendies générés par des court-circuits. Ce disjoncteur comprend une inductance pour détecter des impulsion de court-circuit et des moyens pour comparer une tension obtenue dans un circuit intégrateur alimenté par les impulsions de court-circuit, et une tension de référence, et lorsque la première arrive au niveau de la seconde, ("trip level"), commander le disjoncteur. De plus, il comprend des moyens de mise en forme desdites impulsions.

Outre qu'il comporte une résistance dans le circuit de charge, et dès lors génère des énormes pointes de courant lors de la commutation de charges à faible impédance, ce qui est gênant dans un système basé sur la charge d'un condensateur, cette manière de procéder prend en compte toutes les variations de courant même normales sur une ligne. Parmi celles-ci, et certainement pas les moins gênantes, les inévitables parasites de commutation des collecteurs des moteurs électriques, lesquels, de par leur densité, laisse entrevoir de grandes difficultés pour faire la différence entre des situations normales et d'autres suspectes.

En effet, cette intégration est par définition un phénomène cumulatif qui implique par lui-même une décharge constante, car sinon, même des impulsions considérées comme tout à fait "normales" et admissibles finiraient par déclencher le système, et c'est cet équilibre entre l'apport des suppléments de tension apportés par les impulsions de court-circuit et la nécéssaire décharge du système qui est probablement tout à fait impossible à réaliser de manière à obtenir une parfaite réponse à tous les cas suspects en même temps qu'une absence de déclenchements intempestifs, tant les impulsions générées présentes sur un réseau sont différentes d'un cas à un autre lorsque le réseau est le siège d'un court-circuit ou d'un faux contact.

On voit de suite qu'il est extrêmement délicat dans ces conditions, de contre-balancer les apports et le courant de fuite. Ceci, tout particulièrement au cas où les tensions induites par les courants de court-circuits arrivent par petits trains d'ondes séparées par des périodes sans perturbations relativement longues: la charge du condensateur risque de ne jamais arriver au "trip level", ou au contraire, de multiplier les déclenchements intempestifs si réglé trop sensible.

Le disjoncteur anti-incendie selon l'invention est défini par la revendication 1 et résoud les problèmes de l'art antérieur.

En vue de faciliter le comptage, ces impulsions ou trains d'impulsion seront mises en forme. Les ondes sont simplement comptées, le nombre choisi par unité de temps étant appelé nombre critique. Lorsque ce nombre critique a pu être atteint endéans un laps de temps choisi, appelé Unité de Temps, il entraîne l'action d'un disjoncteur. L'unité de temps étant simplement fixée par un signal de reset récurrent, de façon à devoir obligatoirement avoir un certain nombre d'impulsions endéans cette unité de temps, faute de quoi le signal de "reset" intervient avant que le compteur ne puisse comptabiliser un nombre suffisant de ces impulsions que pour pouvoir actionner le disjoncteur. Ces conditions de présence d'impulsions ou de trains d'impulsions de haute fréquence pouvant elles-même faire l'objet d'un comptage secondaire par unité de temps secondaire, de manière à ne réagir qu'à des situations susceptibles d'entraîner réellement un incendie, ceçi dans le but d'éviter des déclenchements intempestifs dûs à l'introduction hésitante d'une prise de courant d'un radiateur électrique par exemple.

## Revendications

1. Disjoncteur anti-incendie pour courants alternatifs et continus par détection de courants de contacts ponctuels comprenant
- un moyen de détection inductive d'impulsions ou de trains d'impulsions haute fréquence,
- un moyen de mise en forme des impulsions ou trains d'impulsions haute fréquence, et caractérisé en ce qu'il comprend
- un moyen de comptage du nombre de ces impulsions formatées issues de ces impulsions ou trains d'impulsions haute fréquence au moyen de techniques digitales associées à des bases de temps,
- un moyen pour entraîner le déclenchement du disjoncteur lorsque le nombre qui a pu être comptabilisé endéans une unité de temps est au moins égal à un nombre critique prédéterminé, la dite unité de temps étant fixée par un signal de reset récurrent,
- un moyen de comptage du nombre de fois que ce nombre critique a pu être atteint par unité de temps secondaire, pour éviter les déclenchements intempestifs

2. Disjoncteur anti-incendie tel que décrit dans la revendication 1, dans lequel, au lieu de laisser le signal de reset récurrent intervenir de manière cyclique et autonome, on fait coincider le démarrage de l'unité de temps avec la première impulsion suspecte, cette technique permettant de gagner en rapidité de détection, puisque le nombre critique d'impulsions ou de trains d'impulsions qui auraient fait déclencher le disjoncteur ne peut plus être coupé par un signal de reset intervenant de façon arbitraire.

3. Disjoncteur anti-incendie selon la revendication 1 ou 2, et où la détection s'opère par un shunt sur la ligne de charge au lieu de manière inductive.

## Patentansprüche

1. Feuerschutzschalter für Wechsel- und Gleichstrom durch Detektion der Punktkontaktströme, enthält :
- induktive Ortung von kurzen Stromstößen und Hochfrequenzimpulsenserien,
- Transformierung der kurzen Stromstöße oder Hochfrequenzimpulsserien; dies wird noch durch folgendes gekennzeichnet :
- Zählung der Anzahl dieser Impulsformungen, die aus diesen kurzen Stromstößen oder Hochfrequenzimpulsserien hervorgeheen, mittels digitaler Techniken, die an eine Zeitablenkung angeschlossen sind.
- Auslösung des Schalters, wenn die innerhalb einer Zeiteinheit zu erfassende Zahl einer vorbestimmten kritischen Zahl entspricht, diese Zeiteinheit wird durch ein rückläufiges Reset-Signal festgesetzt.
- Zählung, wie oft diese kritishe Zahl pro sekundäre Zeitenheit erreicht werden konnte, um Fehlauslösungen zu vermeiden.

2. Feuerschutz-Schalter wie oben in Patentanspruch 1 beschrieben, indem nicht das rückläufige Reset-Signal zyklish und autonom reagiert, sondern der Anlauf der Zeitenheit mit dem ersten verdächtigen Stromstoß erfolgt. Diese Technik ermöglicht eine schnellere Ortung, da die kritische Anzahl der kurzen Stromstöße oder Impulsserien, die den Schalter ausgelöst hätten, nicht mehr durch ein Reset-Signal unterbrochen werden kann, das willkürlich eingreift.

3. Feuerschutz-Schalter wie in Patenanspruch 1 oder 2, und bei dem die Ortung durch einen Shunt auf der Ladelinie anstatt auf induktive Weise erfolt.

## Claims

1. Fire protection circuit breaker for AC and DC current by detecting point contact currents, including :
- a means for inductive detection of pulses, or high-frequency pulse trains
- a means for shaping pulses or high-frequency pulse trains, and distinguished by the fact that said means includes :
- a means for counting the number of these shaped pulses derived from aforesaid pulses or high-frequency pulse trains, using digital techniques in conjunction with time-base units.
- a means for tripping the circuit-breaker when the number of pulses counted within a certain time interval is equal to or greater than a pre-determined critical number, said time interval being established by a recurring reset signal,
- a means for counting the number of times this critical number was arrived at during a secondary time interval, in order to prevent spurious tripping of the circuit-breaker.

2. Fire-prevention circuit-breaker, such as described in Claim 1, in which, instead of allowing the recurring reset signal to intervene in a cyclical, independent manner, triggering of the time interval is made to coincide with the first suspect pulse; this technique increases detection speed, since the critical number of pulses or pulse trains which would have tripped the circuit-breaker cannot now be interrupted by a reset signal intervening in arbitrary fashion.

3. Fire-prevention circuit-breaker in accordance with Claims 1 and 2, and in which detection is achieved by a shunt resistor across the load line instead of by inductive means.
